# EUROPEAN PATENT SPECIFICATION

(11) **EP 4 468 474 B1**
(45) Date of publication and mention of the grant of the patent: **13.05.2026**
(21) Application number: 23903957.1
(22) Date of filing: 12.12.2023
(51) Int. Cl.: H01M 50/167, H01M 10/48, G01L 5/00, B21D 17/04, B21D 22/14, B21D 53/00, B21D 51/26

(54) **CYLINDRICAL-BATTERY BEADING DEVICE AND METHOD**
VORRICHTUNG UND VERFAHREN ZUM SICKEN VON ZYLINDRISCHEN BATTERIEN
DISPOSITIF ET PROCÉDÉ DE BORDURAGE DE BATTERIES CYLINDRIQUES

(30) Priority: 12.12.2022 KR 20220173002; 05.12.2023 KR 20230174964
(43) Date of publication of application: 27.11.2024
(73) Proprietor: LG Energy Solution, Ltd., Seoul 07335 (KR)
(72) Inventor: KIM, Do-Hyun, Daejeon 34122 (KR); LEE, Jun-Ho, Daejeon 34122 (KR)
(74) Representative: Goddar, Heinz J.
(86) International application number: PCT/KR2023/020427
(87) International publication number: WO 2024/128754

(56) References cited:
- CN-A- 106 848 373
- CN-U- 206 241 004
- CN-U- 208 712 601
- JP-A- 2008 097 885
- KR-A- 20000 018 604
- KR-A- 20060 019 770
- KR-A- 20210 055 363
- KR-B1- 101 728 102

## Description

### TECHNICAL FIELD

The present disclosure relates to a cylindrical-battery beading device and a cylindrical-battery beading method.

### BACKGROUND ART

Cylindrical batteries have a beading portion formed to be recessed inward by press at an end adjacent to the opening of a battery housing to prevent an electrode assembly inside the battery housing from moving up and down.

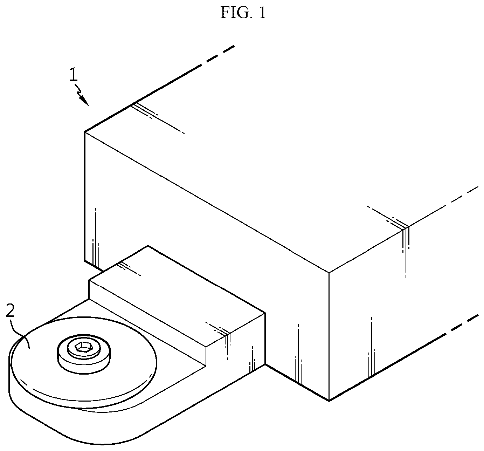

Referring to FIG. 1, in the conventional beading device 1 for forming a beading portion, a device body to which a beading knife 2 is coupled moves forward toward the battery housing such that the battery housing and the beading knife 2 come into contact with each other, thereby performing a beading process.

JP 2008 097885 A, which forms the basis for the preamble of claim 1, embodies a manufacturing method related to a grooving process for forming an annular groove on an outer peripheral surface near an opening end of a bottomed cylindrical battery case in a lithium secondary battery.

CN208712601U relates to a a battery groove rolling machine.

KR 2000 0018604A and KR 2006 0019770 A relate to beading devices for a secondary battery.

Meanwhile, if the force applied to the battery housing is accurately recognized during the beading process, it is possible to predict the quality and properly regulate a drive motor. However, since the conventional beading device does not have a means to measure the force directly applied to the battery housing, the force applied to the battery housing is indirectly predicted by measuring the load of a drive motor (not shown) to drive the device body. However, the load of the drive motor may vary depending on various factors of the beading device, making it difficult to precisely measure the force directly applied to the battery housing.

Therefore, a new cylindrical-battery beading device is required to be developed to solve the problems above.

### DISCLOSURE

### Technical Problem

The present disclosure has been designed to solve the problems of the related art, and therefore the present disclosure is directed to providing a cylindrical-battery beading device and a cylindrical-battery beading method configured to precisely measure the force directly applied to the battery housing during the beading process.

According to another aspect, the present disclosure enables prediction of the quality of the cylindrical battery by precisely measuring the force directly applied to the battery housing during the beading process.

According to another aspect, the present disclosure measures the force directly applied to the battery housing during the beading process in real time, thereby reducing the probability of defects occurring or preventing defects from occurring during the beading process in the entire cylindrical-battery production process.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there may be provided a cylindrical-battery beading device including: a device body capable of moving forward or backward; a beading tool unit including a beading knife and a knife support block to which the beading knife is coupled, and coupled to the device body so as to reciprocate relative to the device body; and a beading-pressure measurement unit fixed to the device body and configured to come into contact with the knife support block and measure a force by which the knife support block is pushed backward during a beading process.

The beading-pressure measurement unit may include a load cell fixed to the device body.

The device body includes a guide rail extending in a straight line, and the knife support block is configured to be slidably coupled to the guide rail and move in a direction toward the beading-pressure measurement unit or in the opposite direction thereof.

The knife support block may include a front block portion facing the battery housing and a rear block portion facing the beading-pressure measurement unit during the beading process, and the beading knife may be mounted to the front block portion, and the rear block portion may include a rear block surface facing the beading-pressure measurement unit, and a contact portion configured to protrude from the rear block surface and come into contact with the beading-pressure measurement unit.

The beading knife may be rotatable and fixed to the knife support block.

The device body has a tool mounting portion to and from which the beading tool unit is attached and detached, and the tool mounting portion includes: a bottom surface on which the guide rail is mounted; a first wall surface facing one end of the guide rail in the extension direction, intersecting the bottom surface, and having the beading-pressure measurement unit fixed thereto; and a second wall surface and a third wall surface that are spaced apart from each other by the distance greater than the width of the knife support block on the bottom surface, are parallel to the guide rail, and intersect the bottom surface, respectively.

The device body includes a spring damper configured to protrude from the first wall surface toward the knife support block and restrict an abrupt movement of the knife support block.

The spring damper may include a first spring damper and a second spring damper protruding from the first wall surface more than the beading-pressure measurement unit on both sides of the beading-pressure measurement unit.

The cylindrical-battery beading device may further include a battery holding jig configured to support the battery housing such that the battery housing is not pushed by the beading tool unit during the beading process.

The battery holding jig may include: a battery holder configured to partially accommodate and support the battery housing; and a holder flange configured to surround the outer circumference of the battery holder; and a bearing member interposed between the battery holder and the holder flange, and the battery holder may be configured to be rotatable.

According to another aspect of the present disclosure, there may be provided a cylindrical-battery beading method of forming a beading portion on a battery housing using the cylindrical-battery beading device described above.

The cylindrical-battery beading method may include: moving the device body forward toward the battery housing such that the beading knife comes into contact with the outer surface of the battery housing and such that the knife support block comes into contact with the beading-pressure measurement unit; moving the device body forward such that the beading knife presses the battery housing and rotating the battery housing to form a beading portion along the circumferential direction of the battery housing; and measuring, using the beading-pressure measurement unit, a force by which the knife support block is pushed back due to the repulsive force of the battery housing in the process of forming the beading portion on the battery housing.

### Advantageous Effects

According to one aspect of the present disclosure, it is possible to precisely measure the force directly applied to the battery housing during the beading process.

According to another aspect of the present disclosure, it is possible to precisely measure the force directly applied to the battery housing during the beading process, thereby predicting the quality of cylindrical battery.

According to another aspect of the present disclosure, it is possible to measure the force directly applied to the battery housing during the beading process in real time, thereby reducing the probability of defects that may occur or preventing the defects from occurring during the beading process in the entire production process of the cylindrical battery.

The effects obtainable from the present disclosure are not limited to the above-mentioned effects, and other effects not mentioned above will be clearly understood by those skilled in the art to which the present disclosure pertains from this specification and the accompanying drawings.

### DESCRIPTION OF DRAWINGS

FIG. 1 is a diagram schematically illustrating the configuration of a cylindrical-battery beading device according to the prior art.
FIG. 2 is a perspective view schematically illustrating a cylindrical-battery beading device according to an embodiment of the present disclosure.
FIG. 3 is a diagram illustrating the state in which a beading tool unit retracts back and comes into contact with a beading-pressure measurement unit in the cylindrical-battery beading device in FIG. 2.
FIGS. 4 to 6 are schematic diagrams illustrating a beading process for a cylindrical battery using a cylindrical-battery beading device according to an embodiment of the present disclosure.
FIG. 7 is a diagram schematically illustrating the configuration of a cylindrical-battery beading device according to another embodiment of the present disclosure.
FIG. 8 is a diagram illustrating the state in which a beading tool unit retracts back and comes into contact with a beading-pressure measurement unit in the cylindrical-battery beading device in FIG. 7.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

In this specification, a cylindrical-battery beading device indicates a device for forming a beading portion on the outer surface of a battery housing. Here, the beading portion indicates a portion in which the outer surface of the battery housing is recessed inward along the circumferential direction. For example, the cylindrical battery may be manufactured by storing a jelly roll-shaped electrode assembly in a cylindrical battery housing with a top opening, forming a beading portion on the outer surface of the battery housing above the electrode assembly, and mounting a cap plate to the opening of the battery housing. In this case, the cap plate may be supported by the beading portion, and the top of the electrode assembly may be blocked by the beading portion, thereby preventing the electrode assembly from moving.

Hereinafter, primary elements of a cylindrical-battery beading device according to the present disclosure will be described.

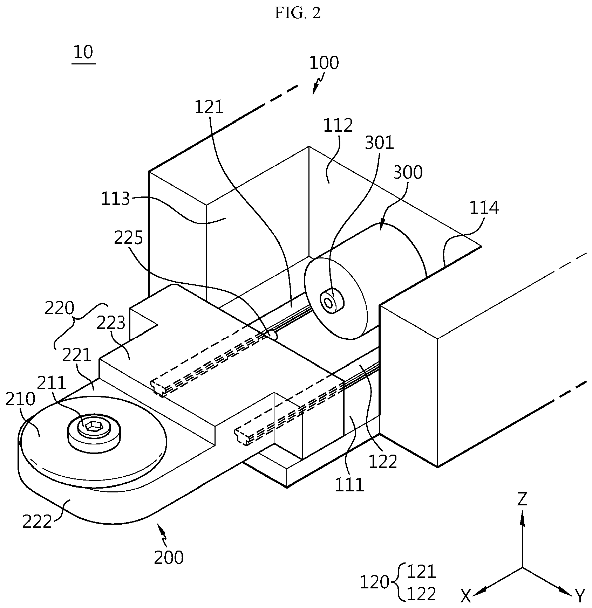

FIG. 2 is a perspective view schematically illustrating a cylindrical-battery beading device according to an embodiment of the present disclosure.

Referring to FIG. 2, the cylindrical-battery beading device 10 according to an embodiment of the present disclosure may include a device body 100, a beading tool unit 200, and a beading-pressure measurement unit 300.

The device body 100 may be configured to move forward or backward while having the beading tool unit 200 attached thereto. The device body 100 may be a structure configured as at least one frame and/or plate. Although not shown, the device body 100 may be connected to an actuator such as a drive motor or a hydraulic cylinder and configured to move forward or backward by operation of the actuator. In addition, the device body 100 may be configured to move up and down or left and right as needed, as well as forward and backward, to form a beading portion 21 at a desired position in the battery housing 20.

The beading tool unit 200 may include a beading knife 210 and a knife support block 220 supporting the beading knife 210, and may be coupled to the device body 100 so as to reciprocate relative to the device body 100.

The beading knife 210 according to this embodiment may be configured in a disk shape. This beading knife 210 may rotate while pressing the outer surface of the battery housing 20 at a predetermined pressure to form a beading portion 21 on the outer surface of the battery housing 20. Here, the battery housing 20 may be configured in the form of a metal can, and the beading knife 210 may be made of a metal material with higher strength than the metal can. For example, the beading knife 210 may be made of stainless steel.

The beading knife 210 may be fixed to the knife support block 220 so as to move integrally with the knife support block 220. For example, as shown in FIG. 2, a rotation shaft 211 may pass through the center of the beading knife 210 and may be coupled to the knife support block 220. Accordingly, the beading knife 210 may rotate clockwise or counterclockwise around the rotation shaft 211 on the knife support block 220.

The knife support block 220 may be configured to be attached and detached to and from the device body 100. For example, the knife support block 220 may be configured to be detachable from the device body 100 to facilitate replacement or maintenance of the beading knife 210 as necessary.

In addition, the knife support block 220 may be connected to the device body 100 so as to reciprocate relative to the device body 100. That is, although the knife support block 220 is connected to the device body 100, it is movable when external force is applied thereto.

As described above, the knife support block 220 is mounted to the device body 100 so that, for example, when the outer surface of the battery housing 20 is pressed by the beading knife 210, the knife support block 220 may be pushed and moved back by the repulsive force of the battery housing 20.

The beading-pressure measurement unit 300 is a pressure measuring means fixed to the device body 100 in the direction in which the knife support block 220 moves backward, and comes into contact with the knife support block 220 during the beading process, thereby measuring the force by which the knife support block 220 is pushed backward.

Aload cell 300 may be employed as the beading-pressure measurement unit 300.

The load cell 300 includes a body and a strain gauge (electrical circuit) attached to the body. If force is applied to the load cell 300, its body is deformed to a degree that cannot be easily recognized with the naked eye. The strain gauge may be deformed along with the body of the load cell 300 while being tightly coupled to the body of the load cell 300 at a predetermined position. In this case, the amount of deformation may change the electrical resistance of the strain gauge in proportion to the applied load. Then, an electrical output signal proportional to the applied force may be obtained using a signal processing electronic device. Since the load cell 300 is a known pressure measuring means, a detailed description thereof will be omitted.

Meanwhile, it should be noted that the scope of the present disclosure is not limited to the fact that the beading-pressure measurement unit 300 is the load cell 300. Any pressure measuring device known at the time of filing the present disclosure may be applied to the beading-pressure measurement unit 300 as long as it is able to measure the force by which the beading tool unit 200 is pushed backward.

According to the cylindrical-battery beading device 10 of the present disclosure having the above configuration, the device body 100 moves forward toward the battery housing 20, and the beading knife 210 comes into direct contact with the battery housing 20, so that the repulsive force of the battery housing 20 acts on the beading knife 210 as much force as the beading knife 210 presses the outer surface of the battery housing 20. In this case, since the knife support block 220 is configured to be movable while supporting the beading knife 210, the knife support block 220 may move backward due to the repulsive force of the battery housing 20. The load cell 300 is disposed in a direction in which the knife support block 220 moves backward, and measures the force by which the knife support block 220 is pushed backward.

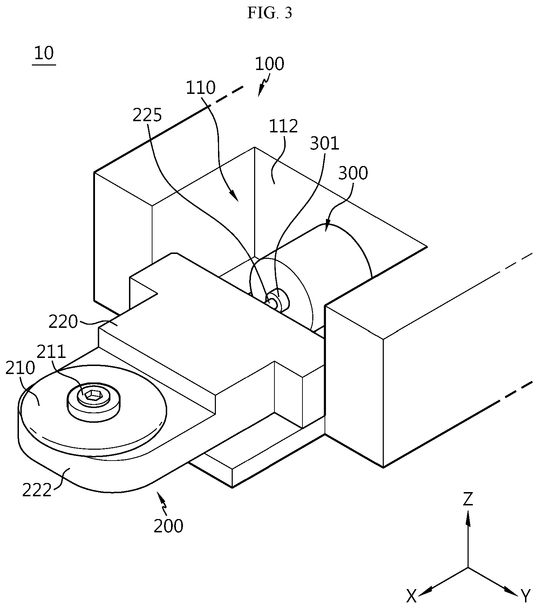

Specifically, referring back to FIGS. 2 and 3, the device body 100 constituting the cylindrical-battery beading device 10 according to the present embodiment includes a tool mounting portion 110 and a guide rail 120 extending in a straight line.

The tool mounting portion 110, to which the beading tool unit 200 is mounted, includes a bottom surface 111 on which the guide rail 120 is mounted, a first wall surface 112 that faces one end of the guide rail 120 in the extension direction, intersects the bottom surface 111, and has the beading-pressure measurement unit 300 fixed thereto, and a second wall surface 113 and a third wall surface 114 that are spaced apart from each other by the distance greater than the width of the knife support block 220 on the bottom surface 111, are parallel to the guide rail 120, and intersect the bottom surface 111, respectively.

The guide rail 120 includes a first guide rail 121 and a second guide rail 122 disposed to be spaced apart from each other in the width direction (the Y-axis direction) of the knife support block 220 on the bottom surface 111 of the tool mounting portion 110. The knife support block 220 may be configured to slide on the first guide rail 121 and the second guide rail 122. For example, the knife support block 220 may have a pair of rail grooves (not shown) configured to match the first and second guide rails 121 and 122 in shape.

The knife support block 220 with the above configuration according to this embodiment moves along the guide rail 120 while supporting the beading knife 210. Therefore, the knife support block 220 may move only in the direction toward the beading-pressure measurement unit 300 (the -X-axis direction) or in the opposite direction (the +X-axis direction) thereof.

The knife support block 220 may include a front block portion 221 facing the battery housing 20 and a rear block portion 223 facing the beading-pressure measurement unit 300 during the beading process.

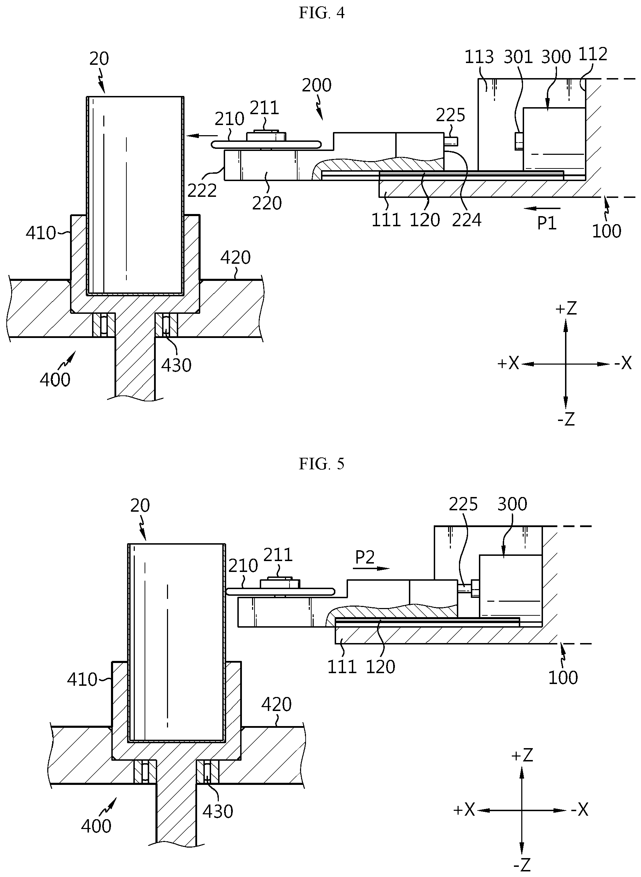

The beading knife 210 is mounted to the front block portion 221. As shown in FIGS. 2 and 4, the beading knife 210 is configured to protrude forward more than the front block surface 222 of the front block portion 221. The length of the beading knife 210 protruding forward more than the front block surface 222 may be configured to be slightly greater than the depth of the beading portion 21 to be formed on the battery housing 20.

The rear block portion 223 may include a rear block surface 224 facing the beading-pressure measurement unit 300, and a contact portion 225 that protrudes from the rear block surface 224 and comes into contact with the beading-pressure measurement unit 300. The contact portion 225 may be provided in the rear block portion 223 to have a shape corresponding to the position and size of a load button 301 protruding from the center of the load cell 300. Preferably, the contact portion 225 may be configured to have a cross-sectional area equal to or smaller than that of the load button 301 of the load cell 300. In this case, the force pushing the knife support block 220 backward may be concentrated on the load button 301, instead of distributed.

Meanwhile, as shown in FIG. 4, the cylindrical-battery beading device 10 may further include a battery holding jig 400 that supports the battery housing 20 such that the battery housing 20 is not pushed by the beading tool unit 200 during the beading process.

The battery holding jig 400 may include a battery holder 410 that partially accommodates and supports the battery housing 20, a holder flange 420 surrounding the outer circumference of the battery holder 410, and a bearing member 430 interposed between the battery holder 410 and the holder flange 420.

The battery holder 410 may have a receiving portion into which the lower part of the battery housing 20 may be inserted and may be configured to be rotatable. For example, the battery holder 410 may have a shaft at the bottom of the receiving portion, and the shaft may be connected to a drive motor (not shown). Accordingly, the battery holder 410 may rotate when the drive motor operates. Therefore, the battery housing 20 may be received inside the battery holder 410 and rotate at the correct position during the beading process.

The holder flange 420 serves to support the battery holder 410 such that the battery holder 410 does not tilt to one side. In particular, the holder flange 420 may be configured to surround the battery holder 410 as shown in FIG. 4, so when the battery holder 410 rotates, the center of rotation may not be eccentric.

The bearing member is a component to minimize friction between the battery holder 410 and the holder flange 420 when the battery holder 410 rotates, and one or more bearing members may be applied to the boundary between the battery holder 410 and the holder flange 420.

Next, referring to FIGS. 4 to 6, the mechanism for measuring the pressure applied to the outer surface of the battery housing 20 during the beading process for the cylindrical battery according to an embodiment of the present disclosure will be described as follows.

First, the device body 100 is positioned at a height corresponding to the height of a portion where the beading portion 21 is formed in the battery housing 20, and then moves forward toward the battery housing 20 (in the +X-axis direction). That is, as indicated by "P1" in FIG. 4, the device body 100 moves forward toward the battery housing 20 in the +X-axis direction. In this case, the beading knife 210 is located on the same plane as the portion of the battery housing 20 where the beading portion 21 is to be formed.

As shown in FIG. 5, the device body 100 moves forward toward the battery housing 20 until the beading knife 210 comes into contact with the outer surface of the battery housing 20 and until the contact portion 225 of the knife support block 220 comes into contact with the load button 301 of the load cell 300.

In the process of the device body 100 moving forward, the beading knife 210 may first come into contact with the outer surface of the battery housing 20, and then the knife support block 220 may move along the guide rail 120 relative thereto, so that the contact portion 225 of the knife support block 220 and the load button 301 of the load cell 300 may come into contact with each other.

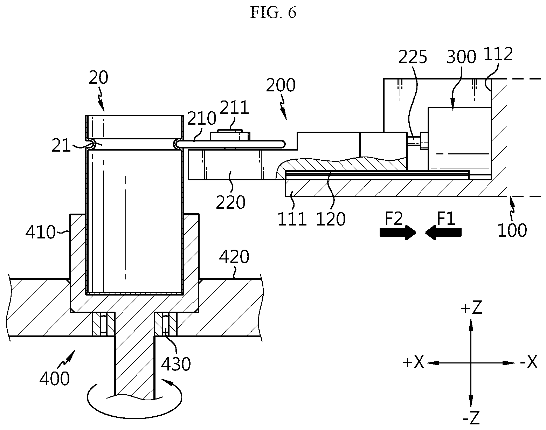

If the device body 100 moves a little further in the above state, as shown in FIG. 6, the battery housing 20 is pressed by the beading knife 210 to form a beading portion 21 on the upper portion of the battery housing 20. In this case, since the battery housing 20 is stationary, the repulsive force of the battery housing 20 is transmitted to the beading tool unit 200.

As described above, the beading tool unit 200 is configured to move in the forward direction (the +X-axis direction) or in the backward direction (the -X-axis direction) with respect to the device body 100, and the load cell 300 is disposed in the direction in which the beading tool unit 200 moves backward. Therefore, during the beading process, the repulsive force of the battery housing 20 acts on the load cell 300 via the knife support block 220.

In FIG. 6, "F1" is the force transmitted to the beading tool unit 200 from the device body 100, and "F2" is the force transmitted to the beading tool unit 200 from the battery housing 20. In this case, "F2" is the repulsive force of the battery housing 20 against "F₁", and two forces are balanced during the beading process, so F₁ and F₂ are almost the same. Therefore, the repulsive force of the battery housing 20 measured by the load cell 300 during the beading process may be regarded as the force by which the beading knife 210 presses the battery housing 20.

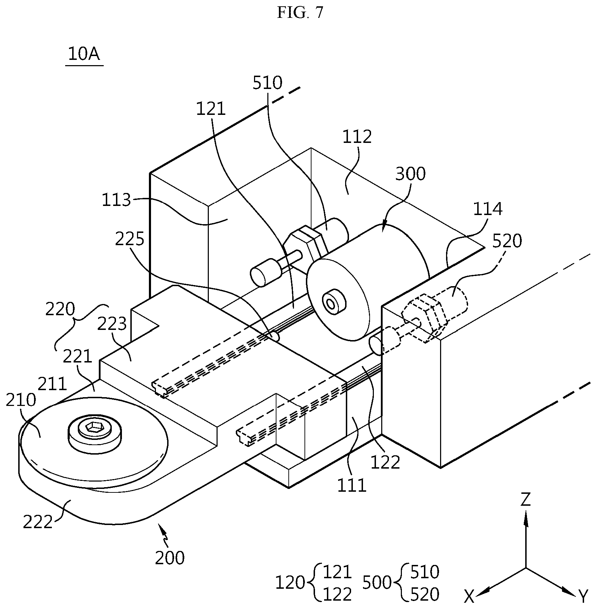

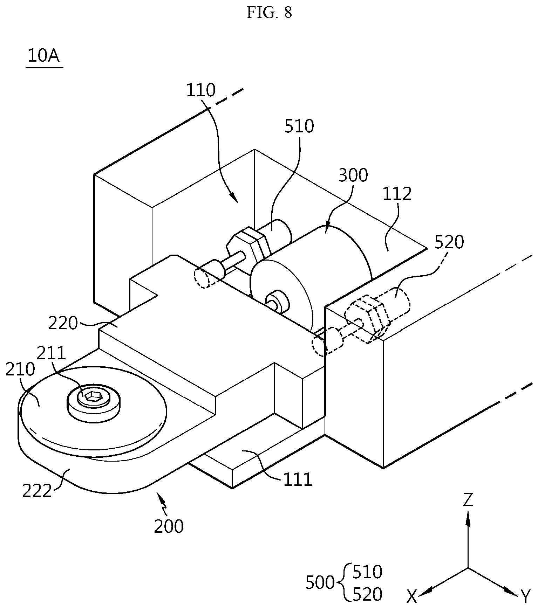

FIG. 7 is a diagram schematically illustrating the configuration of a cylindrical-battery beading device 10A according to another embodiment of the present disclosure, and FIG. 8 is a diagram illustrating the state in which a beading tool unit 200 is pushed back and comes into contact with a beading-pressure measurement unit 300 in the cylindrical-battery beading device 10A in FIG. 7.

Subsequently, the cylindrical-battery beading device 10A according to another embodiment of the present disclosure will be briefly described.

The same reference numerals as those in the above-described embodiment indicate the same members, and redundant descriptions of the same members will be omitted, and a description will be made based on differences from the above-described embodiment.

Referring to FIGS. 7 and 8, a device body 100 according the present disclosure further includes a spring damper 500, compared to the above-described embodiment.

The spring damper 500 is configured to protrude from the first wall surface 112 of the device body 100 toward the knife support block 220 and restrict an abrupt movement of the knife support block 220. For example, the spring damper 500 may have a coil spring (not shown) therein. The spring damper 500 may have one end fixed to the first wall surface 112 and the other end facing the rear block surface 224 of the knife support block 220. If the knife support block 220 moves backward while in contact with the spring damper 500, the coil spring of the spring damper 500 may be compressed so that the speed thereof may be rapidly reduced.

Specifically, the spring damper 500 according to the present embodiment may include a first spring damper 510 and a second spring damper 520 protruding from the first wall surface 112 more than the beading-pressure measurement unit 300 on both sides of the beading-pressure measurement unit 300. In this case, even if the knife support block 220 moves rapidly backward, it may come into contact with the first spring damper 510 and the second spring damper 520 such that the speed is reduced, thereby preventing excessive collisions between the knife support block 220 and the beading-pressure measurement unit 300.

Next, a cylindrical-battery beading method according to an embodiment of the present disclosure will be briefly described.

The cylindrical-battery beading method according to an embodiment of the present disclosure may be performed using the cylindrical-battery beading device 10 according to the present disclosure described above.

The cylindrical-battery beading method may include a step of moving the device body 100 forward toward the battery housing 20 such that the beading knife 210 comes into contact with the outer surface of the battery housing 20 and such that the knife support block 220 comes into contact with the beading-pressure measurement unit 300, a step of moving the device body 100 forward such that the beading knife 210 presses the battery housing 20 and rotating the battery housing 20 to form a beading portion 21 along the circumferential direction of the battery housing 20, and a step of measuring, using the beading-pressure measurement unit 300, the force by which the knife support block 220 is pushed back due to the repulsive force of the battery housing 20 in the process of forming the beading portion 21 on the battery housing 20.

According to the cylindrical-battery beading method described above, it is possible to more accurately identify the repulsive force of the battery housing 20, that is, the pressure applied to the battery housing 20 by the beading knife 210, during the beading process. Therefore, according to the present disclosure, for example, the output of the drive motor for driving the cylindrical-battery beading device 10 may be more precisely adjusted with reference to the pressure applied to the battery housing 20 during the beading process, thereby improving the quality of the cylindrical battery.

Meanwhile, although terms indicating directions such as up, down, left, right, forward, and backward directions are used in this specification, it is obvious to those skilled in the art that these terms are only for convenience of explanation and may vary depending on the location of the target object or the location of the observer.

## Claims

1. A cylindrical-battery beading device (10) that forms a beading portion (21) on the outer surface of the battery housing (20), the cylindrical-battery beading device (10) comprising:
a device body (100) capable of moving forward or backward;
a beading tool unit (200) comprising a beading knife (210) and a knife support block (220) to which the beading knife (210) is coupled, and coupled to the device body (100) so as to reciprocate relative to the device body (100); and
a beading-pressure measurement unit (300) fixed to the device body (100) and configured to come into contact with the knife support block (220) and measure a force by which the knife support block (220) is pushed backward during the beading process,
wherein the device body (100) comprises a guide rail (120, 121, 122) extending in a straight line, and
wherein the knife support block (220) is configured to be slidably coupled to the guide rail (120, 121, 122) and move in a direction (+X) toward the beading-pressure measurement unit (300) or in the opposite direction (-X) thereof,
wherein the device body (100) has a tool mounting portion (110) to and from which the beading tool unit (200) is attached and detached, and
wherein the tool mounting portion (110) comprises:
a bottom surface (111) on which the guide rail (120, 121, 122) is mounted;
a first wall surface (112) facing one end of the guide rail (120, 121, 122) in the extension direction, intersecting the bottom surface (111), and having the beading-pressure measurement unit (300) fixed thereto; and
a second wall surface (113) and a third wall surface (114) that are spaced apart from each other by the distance greater than the width of the knife support block (220) on the bottom surface (111), are parallel to the guide rail (120, 121, 122), and intersect the bottom surface (111), respectively,
**characterized in that**
the device body (100) comprises a spring damper (500) configured to protrude from the first wall surface (112) toward the knife support block (220) and restrict an abrupt movement of the knife support block (220).

2. The cylindrical-battery beading device (10) according to claim 1,
wherein the beading-pressure measurement unit (300) comprises a load cell fixed to the device body (100).

3. The cylindrical-battery beading device (10) according to claim 1,
wherein the knife support block (220) comprises a front block portion (221) facing the battery housing (20) and a rear block portion (223) facing the beading-pressure measurement unit (300) during the beading process,
wherein the beading knife (210) is mounted to the front block portion (221), and
wherein the rear block portion (223) comprises a rear block surface (224) facing the beading-pressure measurement unit (300), and a contact portion configured to protrude from the rear block surface (224) and come into contact with the beading-pressure measurement unit (300).

4. The cylindrical-battery beading device (10) according to claim 1,
wherein the beading knife (210) is rotatable and fixed to the knife support block (220).

5. The cylindrical-battery beading device (10) according to claim 1,
wherein the spring damper (500) comprises a first spring damper (510) and a second spring damper (520) protruding from the first wall surface (112) more than the beading-pressure measurement unit (300) on both sides of the beading-pressure measurement unit (300).

6. The cylindrical-battery beading device (10) according to claim 1,
further comprising a battery holding jig (400) configured to support the battery housing (20) such that the battery housing (20) is not pushed by the beading tool unit (200) during the beading process.

7. The cylindrical-battery beading device (10) according to claim 6,
wherein the battery holding jig (400) comprises:
a battery holder (410) configured to partially accommodate and support the battery housing (20); and
a holder flange configured to surround the outer circumference of the battery holder (410); and
a bearing member interposed between the battery holder (410) and the holder flange, and
wherein the battery holder (410) is configured to be rotatable.

8. A cylindrical-battery beading method of forming a beading portion (21) on a battery housing (20) using the cylindrical-battery beading device (10) according to claim 1, the method comprising:
moving the device body (100) forward toward the battery housing (20) such that the beading knife (210) comes into contact with the outer surface of the battery housing (20) and such that the knife support block (220) comes into contact with the beading-pressure measurement unit (300);
moving the device body (100) forward such that the beading knife (210) presses the battery housing (20) and rotating the battery housing (20) to form a beading portion (21) along the circumferential direction of the battery housing (20); and
measuring, using the beading-pressure measurement unit (300), a force by which the knife support block (220) is pushed back due to the repulsive force of the battery housing (20) in the process of forming the beading portion (21) on the battery housing (20).

## Patentansprüche

1. Vorrichtung (10) zum Formen eines Sickenabschnitt (21) an der Außenfläche des Batteriegehäuses (20) bildet, wobei die Vorrichtung (10) zum Bilden einer Sicke an einer zylindrischen Batterie umfasst:
einen Vorrichtungskörper (100), der sich vorwärts oder rückwärts bewegen kann;
eine Sickenwerkzeugeinheit (200), die ein Sickenmesser (210) und einen Messerhalterblock (220) umfasst, an den das Sickenmesser (210) gekoppelt ist, und die mit dem Vorrichtungskörper (100) verbunden ist, um sich relativ zu diesem hin- und herzubewegen; und
eine Sicken-Druckmesseinheit (300), die am Vorrichtungskörper (100) befestigt und so konfiguriert ist, dass sie mit dem Messerhalterblock (220) in Kontakt kommt und eine Kraft misst, mit der der Messerhalterblock (220) während des Sickenvorgangs nach hinten gedrückt wird,
wobei der Vorrichtungskörper (100) eine sich in einer geraden Linie erstreckende Führungsschiene (120, 121, 122) umfasst, und
wobei der Messerhalterblock (220) so ausgebildet ist, dass er verschiebbar mit der Führungsschiene (120, 121, 122) verbunden ist und sich in Richtung (+X) auf die Sicken-Druckmesseinheit (300) zu oder in deren entgegengesetzter Richtung (-X) bewegt,
wobei der Vorrichtungskörper (100) einen Werkzeugbefestigungsabschnitt (110) aufweist, an dem die Sickenwerkzeugeinheit (200) angebracht und von dem sie gelöst wird, und
wobei der Werkzeugbefestigungsabschnitt (110) umfasst:
eine Bodenfläche (111), an der die Führungsschiene (120, 121, 122) montiert ist;
eine erste Wandfläche (112), die in Verlängerungsrichtung einem Ende der Führungsschiene (120, 121, 122) zugewandt ist, die Bodenfläche (111) schneidet und an der die Sicken-Druckmesseinheit (300) befestigt ist; und
eine zweite Wandfläche (113) und eine dritte Wandfläche (114), die an der Bodenfläche (111) in einem Abstand voneinander angeordnet sind, der größer ist als die Breite des Messerhalterblocks (220), parallel zur Führungsschiene (120, 121, 122) verlaufen und jeweils die Bodenfläche (111) schneiden,
**dadurch gekennzeichnet, dass**
der Vorrichtungskörper (100) einen Federdämpfer (500) umfasst, der so ausgebildet ist, dass er von der ersten Wandfläche (112) in Richtung des Messerhalterblocks (220) vorsteht und eine abrupte Bewegung des Messerhalterblocks (220) begrenzt.

2. Sicken-Formvorrichtung (10) für eine zylindrische Batterie nach Anspruch 1,
wobei die Sicken-Druckmesseinheit (300) eine am Vorrichtungskörper (100) befestigte Wägezelle umfasst.

3. Sicken-Formvorrichtung (10) für eine zylindrische Batterie nach Anspruch 1,
wobei der Messerhalterblock (220) einen dem Batteriegehäuse (20) zugewandten vorderen Blockabschnitt (221) und einen der Sicken-Druckmesseinheit (300) während des Sickens zugewandten hinteren Blockabschnitt (223) umfasst,
wobei das Sickenmesser (210) an dem vorderen Blockabschnitt (221) angebracht ist, und
wobei der hintere Blockabschnitt (223) eine der Sicken-Druckmesseinheit (300) zugewandte hintere Blockfläche (224) und einen Kontaktabschnitt aufweist, der so ausgebildet ist, dass er aus der hinteren Blockfläche (224) herausragt und mit der Sicken-Druckmesseinheit (300) in Kontakt kommt.

4. Sicken-Formvorrichtung (10) für eine zylindrische Batterie nach Anspruch 1,
wobei das Sickenmesser (210) drehbar und am Messerhalterblock (220) befestigt ist.

5. Sicken-Formvorrichtung (10) für eine zylindrische Batterie nach Anspruch 1,
wobei der Federdämpfer (500) einen ersten Federdämpfer (510) und einen zweiten Federdämpfer (520) umfasst, die auf beiden Seiten der Sicken-Druckmesseinheit (300) weiter aus der ersten Wandfläche (112) herausragen als die Sicken-Druckmesseinheit (300) selbst.

6. Sicken-Formvorrichtung (10) für eine zylindrische Batterie nach Anspruch 1,
die ferner eine Batteriehaltevorrichtung (400) umfasst, die das Batteriegehäuse (20) derart stützt, dass das Batteriegehäuse (20) während des Sickens nicht von der Sickenwerkzeugeinheit (200) verschoben wird.

7. Sicken-Formvorrichtung (10) für eine zylindrische Batterie nach Anspruch 6,
wobei die Batteriehaltevorrichtung (400) umfasst:
einen Batteriehalter (410) zum teilweisen Aufnehmen und zum Stützen des Batteriegehäuses (20); und
einen Halteflansch zum Umgeben des Außenumfangs des Batteriehalters (410); und
ein Lagerelement, das zwischen dem Batteriehalter (410) und dem Halteflansch angeordnet ist, und
wobei der Batteriehalter (410) drehbar ausgebildet ist.

8. Verfahren zum Ausbilden eines Sickenabschnitts (21) an einem Batteriegehäuse (20) unter Verwendung der Vorrichtung (10) zum Sicken eines zylindrischen Batteriegehäuses gemäß Anspruch 1, wobei das Verfahren umfasst:
das Vorwärtsbewegen des Vorrichtungskörpers (100) in Richtung des Batteriegehäuses (20) in einer solchen Weise, dass das Sickenmesser (210) mit der Außenfläche des Batteriegehäuses (20) in Kontakt kommt und dass der Messerhalterblock (220) mit der Sicken-Druckmesseinheit (300) in Kontakt kommt;
das Vorrichtungsgehäuse (100) so nach vorne zu bewegen, dass das Sickenmesser (210) gegen das Batteriegehäuse (20) drückt, und das Batteriegehäuse (20) zu drehen, um entlang der Umfangsrichtung des Batteriegehäuses (20) einen Sickenabschnitt (21) zu bilden; und
Messen einer Kraft, mit der der Messerträgerblock (220) aufgrund der Abstoßungskraft des Batteriegehäuses (20) beim Bilden des Sickenabschnitts (21) am Batteriegehäuse (20) zurückgedrückt wird, unter Verwendung der Sicken-Druckmesseinheit (300).

## Revendications

1. Dispositif de roulage des bords de batterie cylindrique (10) qui forme une portion de roulage (21) sur la surface externe du boîtier de batterie (20), le dispositif de roulage des bords de batterie cylindrique (10) comprenant :
un corps de dispositif (100) apte à se déplacer vers l'avant ou vers l'arrière ;
une unité d'outil de roulage (200) comprenant une lame de roulage (210) et un bloc de support de lame (220) auquel la lame de roulage (210) est couplée, et couplée au corps de dispositif (100) de sorte à effectuer un mouvement de va-et-vient relativement au corps de dispositif (100) ; et
une unité de mesure de pression de roulage (300) fixée au corps de dispositif (100) et configurée pour venir en contact avec le bloc de support de lame (220) et mesurer une force suivant laquelle le bloc de support de lame (220) est poussé en arrière durant le processus de roulage des bords,
dans lequel le corps de dispositif (100) comprend un rail de guidage (120, 121, 122) qui s'étend suivant une ligne droite, et
dans lequel le bloc de support de lame (220) est configuré pour être couplé de manière coulissante au rail de guidage (120, 121, 122) et se déplacer dans une direction (+X) vers l'unité de mesure de pression de roulage (300) ou dans la direction opposée (-X) à celle-ci,
dans lequel le corps de dispositif (100) a une portion de montage d'outil (110) à laquelle, et à partir de laquelle, l'unité d'outil de roulage (200) est attachée et détachée, et
dans lequel la portion de montage d'outil (110) comprend :
une surface inférieure (111) sur laquelle le rail de guidage (120, 121, 122) est monté ;
une première surface de paroi (112) faisant face à une extrémité du rail de guidage (120, 121, 122) dans la direction d'extension, entrecroisant la surface inférieure (111), et ayant l'unité de mesure de pression de roulage (300) fixée sur celle-ci ; et
une deuxième surface de paroi (113) et une troisième surface de paroi (114) qui sont espacées l'une de l'autre par une distance qui est plus grande que la largeur du bloc de support de lame (220) sur la surface inférieure (111), sont parallèles au rail de guidage (120, 121, 122), et entrecroisent la surface inférieure (111), respectivement,
**caractérisé en ce que**
le corps de dispositif (100) comprend un amortisseur de ressort (500) configuré pour faire saillie à partir de la première surface de paroi (112) vers le bloc de support de lame (220) et restreindre un mouvement abrupt du bloc de support de lame (220).

2. Dispositif de roulage des bords de batterie cylindrique (10) selon la revendication 1,
dans lequel l'unité de mesure de pression de roulage (300) comprend une cellule de charge qui est fixée au corps de dispositif (100).

3. Dispositif de roulage des bords de batterie cylindrique (10) selon la revendication 1,
dans lequel le bloc de support de lame (220) comprend une portion de bloc avant (221) faisant face au boîtier de batterie (20) et une portion de bloc arrière (223) faisant face à l'unité de mesure de pression de roulage (300) durant le processus de roulage des bords,
dans lequel la lame de roulage (210) est montée sur la portion de bloc avant (221), et
dans lequel la portion de bloc arrière (223) comprend une surface de bloc arrière (224) faisant face à l'unité de mesure de pression de roulage (300), et une portion de contact configurée pour faire saillie à partir de la surface de bloc arrière (224) et se mettre en contact avec l'unité de mesure de pression de roulage (300).

4. Dispositif de roulage des bords de batterie cylindrique (10) selon la revendication 1,
dans lequel la lame de roulage (210) est rotative et est fixée sur le bloc de support de lame (220).

5. Dispositif de roulage des bords de batterie cylindrique (10) selon la revendication 1,
dans lequel l'amortisseur de ressort (500) comprend un premier amortisseur de ressort (510) et un deuxième amortisseur de ressort (520) faisant saillie à partir de la première surface de paroi (112) davantage que l'unité de mesure de pression de roulage (300) sur les deux côtés de l'unité de mesure de pression de roulage (300).

6. Dispositif de roulage des bords de batterie cylindrique (10) selon la revendication 1,
comprenant en outre un montage de maintien de batterie (400) configuré pour soutenir le boîtier de batterie (20) de telle sorte que le boîtier de batterie (20) ne soit pas poussé par l'unité d'outil de roulage (200) durant le processus de roulage des bords.

7. Dispositif de roulage des bords de batterie cylindrique (10) selon la revendication 6,
dans lequel le montage de maintien de batterie (400) comprend :
un dispositif de soutien de batterie (410) configuré pour recevoir partiellement et soutenir le boîtier de batterie (20) ; et
une bride de dispositif de soutien configurée pour entourer la circonférence externe du dispositif de soutien de batterie (410) ; et
un élément palier interposé entre le dispositif de soutien de batterie (410) et la bride de dispositif de soutien, et
dans lequel le dispositif de soutien de batterie (410) est configuré pour être rotatif.

8. Procédé de roulage des bords de batterie cylindrique destiné à former une portion de roulage (21) sur un boîtier de batterie (20) en utilisant le dispositif de roulage des bords de batterie cylindrique (10) selon la revendication 1, le procédé comprenant :
le déplacement du corps de dispositif (100) vers l'avant vers le boîtier de batterie (20) de telle sorte que la lame de roulage (210) vienne en contact avec la surface externe du boîtier de batterie (20) et de telle sorte que le bloc de support de lame (220) vienne en contact avec l'unité de mesure de pression de roulage (300) ;
le déplacement du corps de dispositif (100) vers l'avant de telle sorte que la lame de roulage (210) appuie sur le boîtier de batterie (20) et la rotation du boîtier de batterie (20) pour former une portion de roulage (21) le long de la direction circonférentielle du boîtier de batterie (20) ; et
la mesure, grâce à l'utilisation de l'unité de mesure de pression de roulage (300), d'une force suivant laquelle le bloc de support de lame (220) est poussé en arrière en raison de la force répulsive du boîtier de batterie (20) lors du processus de formage de la portion de roulage des bords (21) sur le boîtier de batterie (20).
